# EUROPEAN PATENT SPECIFICATION

(11) **EP 3 581 369 B1**
(45) Date of publication and mention of the grant of the patent: **26.01.2022**
(21) Application number: 19178436.2
(22) Date of filing: 05.06.2019
(51) Int. Cl.: B29C 65/08

(54) **A METHOD FOR SEALING TOGETHER A FIRST SECTION AND A SECOND SECTION OF A PACKAGING MATERIAL, A SYSTEM FOR SEALING**
VERFAHREN ZUM VERSIEGELN EINES ERSTEN ABSCHNITTS UND EINES ZWEITEN ABSCHNITTS EINES VERPACKUNGSMATERIALS, SYSTEM ZUM VERSIEGELN
PROCÉDÉ POUR SCELLER ENSEMBLE UNE PREMIÈRE SECTION ET UNE SECONDE SECTION D'UN MATÉRIAU D'EMBALLAGE, SYSTÈME POUR SCELLER

(30) Priority: 12.06.2018 EP 18177294
(43) Date of publication of application: 18.12.2019
(73) Proprietor: Tetra Laval Holdings & Finance S.A., 1009 Pully (CH)
(72) Inventor: ALEXANDERSSON, Martin, 244 65 Furulund (SE)
(74) Representative: Tetra Pak - Patent Attorneys SE

(56) References cited:
- WO-A1-2006/029835
- FR-A1- 2 628 030
- FR-A2- 2 136 875
- JP-A- H09 278 022
- JP-A- S52 125 540

## Description

### Technical Field

The invention relates to packaging technology. More particularly, it relates to ultra-sonic sealing technology, such as a method for sealing together a first section and a second section of a piece of packaging material, a system for sealing.

### Background Art

Within the field of packaging technology there is a number of different technologies available for sealing packaging material such that packages can be formed. A well-known technology used for sealing together packages is so-called ultra-sonic sealing. The general principle of this technology is that a sonotrode, also referred to as an ultra-sonic horn, is producing ultra-sonic waves, which results in that part of the packaging material melts. At the same time as heat is generated, two sections of the packaging material are pressed towards one another such that these attach to each other.

Ultra-sonic sealing is commonly used within the packaging industry. Within the liquid food packaging industry, the technology is commonly used for producing packages for holding chilled products, that is, products to be held refrigerated and not in room temperature, such as pasteurized milk. One reason for that the ultra-sonic sealing technology is commonly used for packages for chilled products is that these packages, due to that they are placed in a refrigerator, do not need an Aluminum layer. An effect of not having an Aluminum layer is that technologies, such as induction heat sealing, which is requiring a conductive layer in the packaging material, cannot be used. Another effect of not having the Aluminum layer is that the environmental impact of the packages can be reduced.

An anvil is used to provide for that the packaging material is positioned in relation to the sonotrode such that proper sealing can be achieved. As is disclosed in patent document DE20216532, the anvil may comprise a number of sections that are connected to compression springs. Also patent document JP9278022 discloses that compression springs may form part of the anvil.

FR 2 136 875 discloses a continuous ultrasonic sealing device for closing bags by thermal sealing after they have been filled. The sealing device is operated by controlling, the three determining factors: temperature, pressure and time. Temperature being regulated by the amplitude intensity of the ultrasound. Pressure being regulated by the air gap and time being regulated by the speed of travel.

FR 2 628 030 discloses a system for continuous welding by means of ultrasound. It discloses a welding anvil composed of several drive wheels comprising a plurality of rollers arranged in single file facing the sonotrodes with a spacing at least equal to the movement of forks according to the number and the size of the sonotrodes.

JP S52 125540 discloses a continuous ultrasonic sealing device for sealing plastic film or cloth. The ultrasonic vibrations are applied to move the film and welding continuously.

Even though the prior art discloses ways to design the anvil such that an ultra-sonic sealing system may be adapted to for instance different packaging material thicknesses, there is still a need to further improve the ultra-sonic sealing system such that ultra-sonic sealings can be achieved in a more reliable, cost efficient and time efficient manner.

### Summary

It is an object of the invention to at least partly overcome one or more of the above-identified limitations of the prior art. In particular, it is an object of the invention to provide an improved method according to claim 1 and a system according to claim 8 for ultra-sonic sealing from a cost as well as a quality perspective.

According to a first aspect it is provided a method for sealing together a first section and a second section of a piece of packaging material. The method comprises
arranging the piece of packaging material such that the first and second section lie against each other,
melting at least one plastic layer in the first and second section by feeding the piece of packaging material through a heating station, wherein the heating station comprises at least one ultra-sonic horn placed on a first side of the piece and a first group of anvil elements placed on a second side of the piece, wherein the first side is opposite to the second side, wherein the first group of anvil elements is fixedly positioned with respect to the at least one ultra-sonic horn, and
cooling down the piece of packaging material such that the at least one plastic layer is solidified.

An advantage of having the first group fixedly positioned with respect to the at least one ultra-sonic horn, and thereby instead of having the anvil elements being moved having the piece being moved, provides for that a speed of the sealing may be increased. The piece of packaging material is continuously fed through the heating station. A continuous ultra-sonic seal is provided.

Further, an advantage of having the anvil elements provided with the anvil heads is that the pressure P exerted onto the piece is provided by using a plurality of elements. By doing so, a risk that part of the piece is not provided with the pressure P, and as an effect that an insufficient sealing is provided, can be lowered. This especially holds true if the piece comprises a three-layer section, e.g. a longitudinal sealing, and two-layer sections.

Having the plurality of elements also increases a possibility to fine tune the first group of anvil elements such that the pressure P exerted onto the piece is adapted such that sufficient sealing can be achieved.

In addition, having the plurality of elements improves a redundancy of the heating station. For instance, even though one of the plurality of elements fails to exert pressure onto the piece, a remainder of the elements may provide sufficient pressure for achieving sufficient sealing.

Further, the step of cooling down the piece may comprise feeding the piece through a cooling station, wherein the cooling station comprises cooling elements, such as cooling wheels, placed on the first side of the piece of packaging material and a second group of anvil elements placed on the second side of the piece of packaging material. The piece is continuously fed through the cooling station.

The piece of packaging material may be a carton blank, and the first and second section may be a first and a second top sealing section of the carton blank or a first and a second bottom sealing section of the carton blank.

The at least one ultra-sonic horn and the first group of anvil elements may be placed in a horizontal plane.

At least part of the anvil elements may be attached to springs, such as compression springs.

The anvil elements may be anvil wheels.

At least one of the anvil wheels may be provided with a contact surface comprising at least one first segment of a first segment type and at least one second segment of a second segment type, wherein the first segment type is different from the second segment type.

An advantage with having one or several of the anvil wheels provided with different segment types is that by aligning the anvil wheels with a geometry of the piece different pressure profiles may be applied to different parts of the piece. For instance, the first segment may interact with the three-layer section and the second segment may interact with the two-layer section.

A diameter of the anvil wheels of the first group may be in the range of 5 to 50 mm.

An advantage of having the anvil wheels in this range is that they can provide for that pressure for achieving reliable sealing can be applied also in intersection areas between the two-layer section and the three-layer section.

According to a second aspect it is provided a system for sealing together a first section and a second section of a piece of packaging material, said system comprising
at least one heating station comprising at least one ultra-sonic horn placed on a first side of the piece and a first group of anvil elements placed on a second side of the piece, wherein the first side is opposite to the second side, wherein the first group of anvil elements is fixedly positioned with respect to the at least one ultra-sonic horn, and
a cooling station for cooling down the piece of packaging material such that the at least one plastic layer is solidified.

The cooling station may comprise cooling elements, such as cooling wheels, placed on the first side of the piece of packaging material and a second group of anvil elements placed on the second side of the piece of packaging material.

The piece of packaging material may be a carton blank, and the first and second section may be a first and a second top sealing section of the carton blank or a first and a second bottom sealing section of the carton blank.

The anvil elements may be anvil wheels.

At least one of the anvil wheels may be provided with a contact surface comprising at least one first segment of a first segment type and at least one second segment of a second segment type, wherein the first segment type is different from the second segment type.

A diameter of the anvil wheels of the first group may be in the range of 5 to 50 mm.

It is also disclosed an anvil assembly comprising a group of anvil elements, wherein each anvil element comprises an anvil wheel, configured to be in contact with the piece, and a spring, such as a compression spring, wherein the anvil wheel is connected to the spring, and a mounting device for holding the group of anvil elements, wherein the springs of the anvil elements are connected to the mounting device.

Even though not explicitly stated for each of the aspects, it is to be understood that the advantages presented with respect to one of the aspects also hold true for the other aspects.

### Brief Description of the Drawings

Embodiments will now be described, by way of example, with reference to the accompanying schematic drawings, in which
Fig. 1a generally illustrates a perspective view of a package.
Fig. 1b generally illustrates a piece of packaging material before being folded into the package illustrated in fig. 1a.
Fig. 2 illustrates a cross-sectional view of the packaging material.
Fig. 3 illustrates by way of example a system for transversal sealing of blanks.
Fig. 4 illustrates by way of example another system for transversal sealing of blanks.
Fig. 5a and 5b illustrate examples of adoption of the anvil wheels.
Fig 6 illustrates a flow chart of a method for sealing together a first and a second section of a piece of packaging material.
Fig. 7 illustrates by way of example an anvil assembly.

### Detailed description

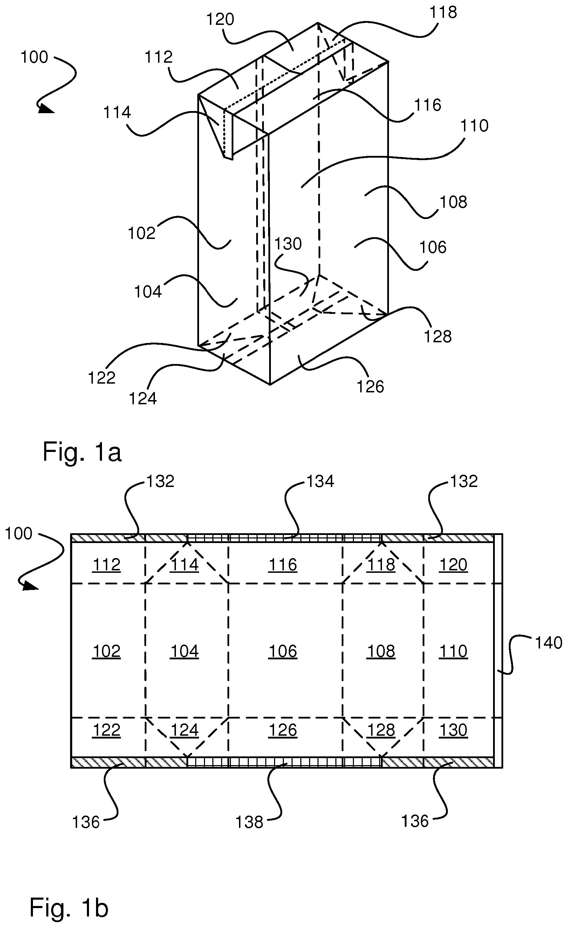

Fig. 1a generally illustrates an example of a carton package 100 made from a piece of package material illustrated in fig. 1b. The carton package 100 comprises a number of panels divided from each other by weakening lines. The weakening lines provide for that the piece of packaging material can be reliably and efficiently folded into the package 100 by a packaging machine, also known as a filling machine.

In this example, the package 100 comprises a first rear panel 102, a left panel 104, a front panel 106, a right panel 108 and a second rear panel 110, which together form a sleeve-shaped main body of the package 100. The first and second rear panel 102, 110 are attached to each other by a so-called longitudinal sealing. In order to avoid that product held in the package comes into contact with interior layers of the packaging material a peripheral part of the second rear panel 110, that is placed inside a peripheral part of the first rear panel 102, can be protected by a plastic strip, sometimes referred to as a longitudinal sealing strip.

Further, the package 100 comprises a first top rear panel 112, a left corner top panel 114, a top front panel 116, a right corner panel 118 and a second top rear panel 120, which together form a top of the package 100. In a similar manner as the first and second rear panel 102, 110, the first and second rear top panels 112, 120 are attached to each other. In order to close the package 100, the first and second rear top panels 112, 120 are attached to the top front panel 116, two sections of the left corner top panel 114 are attached to each other, and two sections of the right corner top panel 118 are attached to each other. This is provided by a transversal sealing made in the packaging machine after the package is filled with the product.

The package 100 also comprises a first bottom rear panel 122, a left corner bottom panel 124, a bottom front panel 126, a right corner bottom panel 128 and a second bottom rear panel 130, which together form a bottom of the package. In a similar manner as the first and second rear panel 102, 110, the first and second bottom rear panels 122, 130 are attached to each other. In order to close the package 100 and thereby form the bottom, the first and second bottom rear panels 122, 130 are attached to the bottom front panel 126, two sections of the left corner bottom panel 124 are attached to each other, and two sections of the right corner bottom panel 128 are attached to each other.

In case the package 100 is produced in a roll-fed packaging machine, a number of pieces of packaging material is provided after one another on a reel of packaging material. By having the pieces of packaging material arranged in this way a transversal sealing forming the bottom can be made at the same time as a transversal sealing forming the top of a subsequent package is made. After having made the transversal sealings, the packages are separated from each other by cutting them apart in a section between the transversal sealings.

To form the transversal sealing, a first top sealing section 134 and a second top sealing section 132 as well as a first bottom sealing section 136 and a second top sealing section 138 can be provided. After having made the transversal sealing, the packaging material can be separated such that the first top sealing section 132 and the second top sealing section 134 form an upper part of the top of the package 100, and in the first bottom sealing section 136 and the second bottom sealing section 138 form a lower part of the bottom of the package 100. To form the longitudinal sealing, a longitudinal sealing section 140 can be used.

In case the package is produced in a blanks-fed packaging machine, the longitudinal sealing is provided beforehand, that is, the first rear panel 102 is attached to the second rear panel 110 via the longitudinal section 140, such that a sleeve-shaped piece of packaging material is provided. In addition, the separation, also referred to as cutting, is not made in the blanks-fed packaging machine, but is made when producing blanks to be fed into the blanks-fed packaging machine.

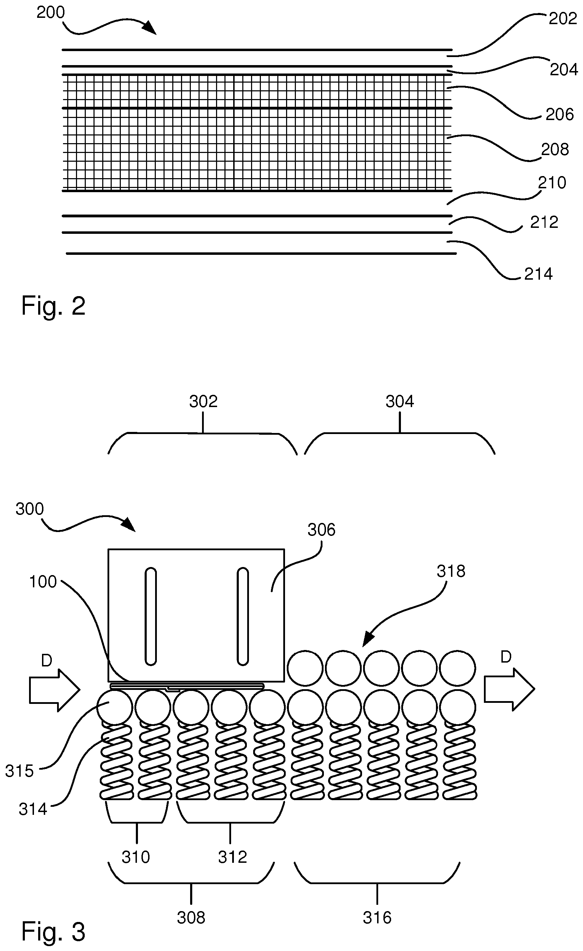

Fig. 2 generally illustrates by way of example a packaging material 200 that can be used for forming the package 100.

Facing the surrounding space, an outer coating 202 may be provided. The outer coating 202 may serve the purpose of avoiding that moisture of water is coming into contact with a printing layer 204 placed inside the outer coating 202. The printing layer 204 can comprise ink or any other material used for providing a print on the package 100.

Inside the printing layer 204, a first and a second paperboard layer 206, 208 can be provided. The first and second paperboard layers 206, 208 provide robustness to the package 100. The first paperboard layer 206 may be bleached paperboard with or without claycoat. The second paperboard layer 208 may be bleached or unbleached paperboard.

Next a lamination layer 210 made of plastic material can be provided. The lamination layer 210 can provide for that microorganisms are hindered from coming into contact with the product held inside the package 100.

Inside the lamination layer 210, an Aluminum foil 212 can be provided. The Aluminum foil 212 can provide for that light, oxygen and odors are hindered from coming into contact with the product held inside the package 100, but also that flavors inside the package can be released from the package 100. The Aluminum foil 212 does however not exist in all types of packaging material. For instance, in the packaging material used for packages for chilled products, i.e. products that will be refrigerated, the Aluminum foil 212 is most often left out and replaced by a combination of lamination layers and paperboard layers.

Closest to the product held inside the package 100, a first and a second internal coating 214, 216, made of e.g. plastics material, can be provided. One purpose with these are that the product is hindered from coming in direct contact with the Aluminum foil 212.

Fig. 3 illustrates an example of a system 300 for transversal sealing of blanks, i.e. sleeve-shaped pieces 100 of packaging material 200 provided with longitudinal sealings, seen from above. The system 300 may form part of a packaging machine further comprising inter alia arrangements for feeding the blanks from a magazine to the system 300, arrangements for filling the blanks after the top or the bottom has been formed with product, and arrangements for folding the blanks into packages.

The system 300 may be used both for forming the bottom of the package 100 by sealing together the first bottom sealing section 136 and the second bottom sealing section 138 or the top by sealing the first top sealing section 132 and the second top sealing section 134. It may be used for sleeve-shaped pieces 100 both with or without product, such as a food product, held inside. In other words, it may be used for closing a first end of the piece before filling with product, or it may be used for closing a second end after the piece has been filled with product.

On a general level, the system 300 comprises a heating station 302 for heating the piece 100 of packaging material 200 and a cooling station 304 for cooling down the piece of packaging material. When heating the piece 100 in the heating station 302 at least one of the plastic layers 210, 214, 216 is melted, and when cooling down the at least one plastic layers 210, 214, 216 is solidified. Together, this provides for that the transversal sealing can be achieved.

The heating station 302 comprises an ultra-sonic horn 306, or other equivalent device for producing ultrasonic waves, and a first group 308 of anvil elements. The first group 308 of anvil elements 308 may in turn comprise a first set and a second set 310, 312 of anvil elements. An overall aim of the first group 308 is to provide for that the piece 100 of packaging material is placed close to the ultra-sonic horn 306 such that the plastic layers 210, 212, 214 are subjected to heat such that in turn these melt. By having the first and the second set 310, 312, wherein the first set 310 is placed before the second set 312 in a direction of movement D of the piece 100, it is made possible to apply different pressures at different stages of the heating station 302. For instance, to provide for that the melting of the plastic layers is made in a controlled manner, it has been found that the first and second set 310, 312 may be adjusted such that higher pressure is applied in a first stage by the first set 310 compared to in a second stage by the second set 312. By applying the higher pressure in the first stage compared to the second stage a risk of not having the melting of the plastic layers initiated can be reduced, and also be applying less pressure in the second stage a risk of over-melting the at least one plastic layers can be reduced. The piece (100) of packaging material is continuously fed through the heating station during the sealing. The anvil elements may comprise springs 314, such as compression springs, and anvil wheels 315 connected to the springs 314.

After the heating station 302 the piece 100 is continuously fed by the anvil elements to the cooling station 304. The cooling station 304 comprises a second group 316 of anvil elements and cooling wheels 318. When feeding the piece 100 through the cooling station 304, the cooling wheels 318 in combination with the second group 316 of anvil elements provide for that a first section, e.g. the first top sealing section 132 or the first bottom sealing section 136, is held close to a second section, e.g. the first bottom sealing section 134 or the second bottom sealing section 138, and due to that no heat is added and that the cooling wheels 318 as well as the second group of anvil elements 316 may be made of heat conductive material, such as stainless steel, heat will be transferred from the piece 100.

Since the sleeve-shaped piece 100 comprises the longitudinal sealing, a width of the piece will not be the same over a whole range of the piece. In an area of the longitudinal sealing three layers of packaging material will be provided an in other areas only two layers of packaging material will be provided resulting in different widths. To provide for that sufficient pressure is provided throughout the whole range, including intersection areas between two-layer packaging material areas and three-layer packaging material areas, it has been found that the anvil wheels 315 with a diameter from 5 to 50 mm can be used.

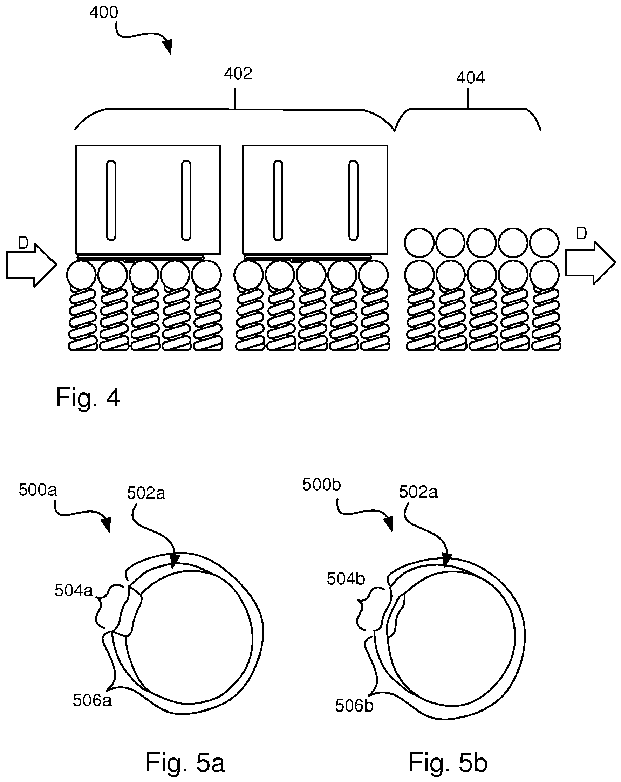

Fig. 4 illustrates another example of a system 400 for transversal sealing of blanks. The system 400 is in many aspects similar to the system 300 illustrated in fig. 3. A difference between the two is however that instead of having one ultra-sonic horn 306 and one first group 308 of anvil elements, these have been duplicated in the system 400 illustrated in fig. 4. By doing so, a heating station 402 of the system 400 may add more heat to the piece 100 compared to the system 300 illustrated in fig. 3. By having a modular approach like this for setting up the heating station 302, 402 as well as the cooling station 304, 404 it is made possible to adapt the system 300, 400 to different packaging materials requiring more or less heat and/or to different feeding speeds resulting in that more or less time is provided for providing heat. The sealing is performed in a continuous way and the packaging material is in constant movement during the sealing. Further, as described above, the system 400 can be adapted by choosing anvil wheels 315 of different diameters.

In addition to choosing the diameter of the anvil wheels 315 such that sufficient pressure can be applied also in the area of the longitudinal sealing, the anvil wheels 315 can be adapted as illustrated in fig. 5a and 5b. Fig. 5a illustrates an adapted anvil wheel 500a having a contact surface 502a. The contact surface 502a comprises a first segment 504a of a first segment type and a second segment 506a of a second segment type. As illustrated, the first segment 504a can be a cut out. By aligning this first anvil wheel 504a with a geometry of the piece 100 this first segment 504a may be arranged to face the longitudinal sealing of the piece. A positive effect of this is that the cut out can compensate for that the longitudinal sealing comprises three layers of packaging material instead of two. By doing so, a risk of breaking the packaging material can be reduced.

Fig. 5b illustrates another embodiment of the adapted anvil wheel 500b. The first segment 504b of the adapted anvil wheel 500b illustrated in fig. 5b is different from the first segment 504a of the adapted anvil wheel 500a illustrated in fig. 5a. Instead of being a full cut out, the first segment 504b illustrated in fig. 5b is a cut out in part. In order to make sure that pressure is only applied via a mid-portion in the first segment 504b, two side sections on each side of the mid-portion have been removed.

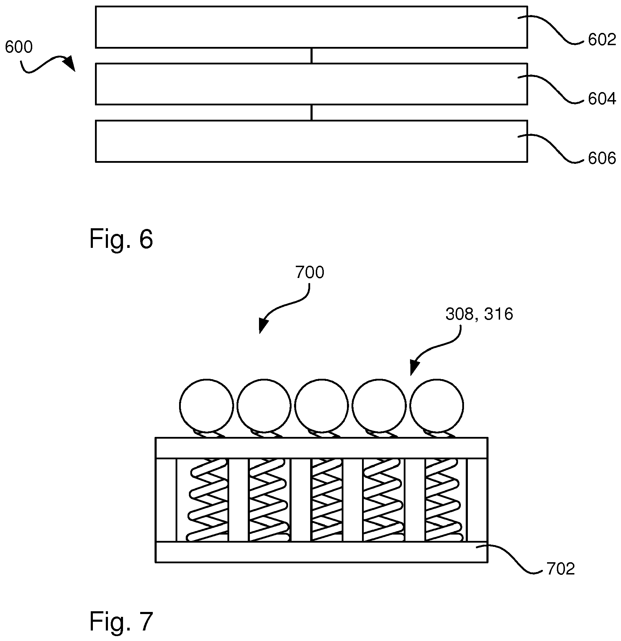

Fig. 6 illustrates a flowchart of a method 600 for sealing together the first section 132, 136 and the second section 134, 138 of the piece 100 of packaging material 200. In a first step 602 ("Arranging piece of packaging material"), the piece 100 is arranged such that the first and second section lie against each other. In a second step 604 ("Melting plastic layer"), the at least one plastic layer 210, 212, 214 can be melted by subjecting the piece to ultra-sonic waves. In a third step 606 ("Cooling down plastic layer"), the piece 100 is cooled down such that the at least one plastic layer 210, 212, 214 is solidified, and as an effect the sealing is formed.

As illustrated in fig. 4, the system 400 may be modular. To provide for that the system 400 in fig. 4, and also the system 300 illustrated in fig. 3, can be efficiently set up, an anvil assembly 700 as illustrated in fig. 7 may be used. The anvil assembly comprises a group of anvil elements, which may be the first group of anvil elements 308 used in combination with the ultra-sonic horn 306 or the second group of anvil elements 316 used in combination with the cooling wheels 318 as illustrated in fig. 3. The group of anvil elements 308, 316 may be attached to a mounting device 702 arranged for holding the group of anvil elements. By having the group of anvil elements attached to the mounting device 702 this can be easily mounted or demounted in the packaging machine such that for instance service interruptions can be shortened.

As described above, having higher pressure in the first stage than in the second stage comes with a number of advantages. An example of a method using this conceptual idea may be described as:
A method for sealing together a first section 132, 136 and a second section 134, 138 of a piece 100 of packaging material 200, said method comprising
arranging the piece 100 of packaging material such that the first 132,136 and second section 134,138 lie against each other,
melting at least one plastic layer 210, 214, 216 in the first 132, 136 and second section 134, 138 by feeding the piece 100 of packaging material through a heating station 302,
wherein the heating station 302 comprises at least one ultra-sonic horn (306) placed on a first side of the piece 100 and a first group (308) of anvil elements placed on a second side of the piece 100, wherein the first side is opposite to the second side,
wherein the first group 308 of anvil elements comprises a first and a second set 310, 312 of anvil elements, wherein the first set 310 of anvil elements is placed before the second set 312 of anvil elements in a direction of movement D of the piece 100,
wherein the first set 310 of anvil elements exerts a first pressure P1 onto the piece 100 and the second set 312 exerts a second pressure P2 onto the piece (100), wherein the first pressure P1 is greater than the second pressure P2, and
cooling 606 down the piece 100 of packaging material such that the at least one plastic layer 212, 214, 216 is solidified.

A corresponding system may be described as:
A system 300 for sealing together a first section 132, 136 and a second section 134, 138 of a piece 100 of packaging material 200, said system comprising
at least one heating station 302 comprising at least one ultra-sonic horn 306 placed on a first side of the piece 100 and a first group 308 of anvil elements placed on a second side of the piece 100, wherein the first side is opposite to the second side,
wherein the first group 308 of anvil elements comprises a first and a second set 310, 312 of anvil elements, wherein the first set 310 of anvil elements is placed before the second set 312 of anvil elements in a direction of movement D of the piece 100,
wherein the first set 310 of anvil elements exerts a first pressure (P1) onto the piece 100 and the second set 312 exerts a second pressure P2 onto the piece 100, wherein the first pressure P1 is greater than the second pressure P2, and
a cooling station 304 for cooling down the piece 100 of packaging material such that the at least one plastic layer 210, 214, 216 is solidified.

From the description above follows that, although various embodiments of the invention have been described and shown, the invention is not restricted thereto, but may also be embodied in other ways within the scope of the subject-matter defined in the following claims.

## Claims

1. A method (600) for sealing together a first section (132, 136) and a second section (134, 138) of a piece (100) of packaging material (200), said method comprising
arranging (602) the piece (100) of packaging material such that the first (132,136) and second section (134,138) lie against each other,
melting (604) at least one plastic layer (210, 214, 216) in the first (132, 136) and second section (134, 138) by feeding the piece (100) of packaging material through a heating station (302), wherein the heating station (302) comprises at least one ultra-sonic horn (306) placed on a first side of the piece (100) and a first group (308) of anvil elements placed on a second side of the piece (100), wherein the first side is opposite to the second side, wherein the first group (308) of anvil elements is fixedly positioned with respect to the at least one ultra-sonic horn (306), **characterized by**
cooling (606) down the piece (100) of packaging material by feeding the piece (100) through a cooling station (304), wherein the cooling station (304) comprises cooling elements (318), such as cooling wheels, placed on the first side of the piece (100) of packaging material and a second group (316) of anvil elements placed on the second side of the piece (100) of packaging material such that the at least one plastic layer (210, 214, 216) is solidified.

2. The method according to the preceding claim, wherein the piece (100) of packaging material is a carton blank, and the first and second section (132, 136, 134, 138) is a first and a second top sealing section (132,134) of the carton blank or a first and a second bottom sealing section (136, 138) of the carton blank.

3. The method according to claim 2, wherein the at least one ultra-sonic horn (306) and the first group (308) of anvil elements are placed in a horizontal plane.

4. The method according to any one of the preceding claims, wherein at least part of the anvil elements are attached to springs (314), such as compression springs.

5. The method according to any one of the preceding claims, wherein the anvil elements are anvil wheels.

6. The method according to claim 5, wherein at least one of the anvil wheels (500a, 500b) are provided with a contact surface (502a, 502b) comprising at least one first segment (504a, 504b) of a first segment type and at least one second segment (506a, 506b) of a second segment type, wherein the first segment type is different from the second segment type.

7. The method according to claim 5 or 6, wherein a diameter of the anvil wheels of the first group (308) is in the range of 5 to 50 mm.

8. A system (300) for sealing together a first section (132, 136) and a second section (134, 138) of a piece (100) of packaging material (200), said system comprising
at least one heating station (302) comprising at least one ultra-sonic horn (306) placed on a first side of the piece (100) and a first group (308) of anvil elements placed on a second side of the piece (100), wherein the first side is opposite to the second side, wherein the first group (308) of anvil elements is fixedly positioned with respect to the at least one ultra-sonic horn (306), **characterized by**
a cooling station (304) for cooling down the piece (100) of packaging material such that the at least one plastic layer (212, 214, 216) is solidified, wherein the cooling station comprises cooling elements (318), such as cooling wheels, placed on the first side of the piece (100) of packaging material and a second group (316) of anvil elements placed on the second side of the piece (100) of packaging material.

9. The system according to claim 8, wherein the anvil elements are anvil wheels.

10. The system according to claim 9, wherein at least one of the anvil wheels (500a, 500b) are provided with a contact surface (502a, 502b) comprising at least one first segment (504a, 504b) of a first segment type and at least one second segment (506a, 506b) of a second segment type, wherein the first segment type is different from the second segment type.

11. The system according to claim 9 or 10, wherein a diameter of the anvil wheels of the first group (308) is in the range of 5 to 50 mm.

## Patentansprüche

1. Verfahren (600) zum Versiegeln eines ersten Abschnitts (132, 136) und eines zweiten Abschnitts (134, 138) eines Stücks (100) Verpackungsmaterial (200) miteinander, wobei das Verfahren umfasst Anordnen (602) des Stücks (100) Verpackungsmaterial derart, dass der erste (132, 136) und zweite Abschnitt (134, 138) aneinander anliegen,
Schmelzen (604) mindestens einer Kunststoffschicht (210, 214, 216) in dem ersten (132, 136) und zweiten Abschnitt (134, 138) durch Führen des Stücks (100) Verpackungsmaterial durch eine Heizstation (302), wobei die Heizstation (302) mindestens eine Sonotrode (306), die an einer ersten Seite des Stücks (100) angeordnet wird, und eine erste Gruppe (308) von Ambosselementen, die an einer zweiten Seite des Stücks (100) angeordnet wird, umfasst, wobei die erste Seite der zweiten Seite entgegengesetzt ist, wobei die erste Gruppe (308) von Ambosselementen in Bezug auf die mindestens eine Sonotrode (306) fest positioniert ist, **gekennzeichnet durch**
Herunterkühlen (606) des Stücks (100) Verpackungsmaterial durch Führen des Stücks (100) durch eine Kühlstation (304), wobei die Kühlstation (304) Kühlelemente (318), beispielsweise Kühlräder, die an der ersten Seite des Stücks (100) Verpackungsmaterial angeordnet werden, und eine zweite Gruppe (316) von Ambosselementen, die an der zweiten Seite des Stücks (100) Verpackungsmaterial angeordnet wird, umfasst, so dass die mindestens eine Kunststoffschicht (210, 214, 216) verfestigt wird.

2. Verfahren nach dem vorhergehenden Anspruch, wobei das Stück (100) Verpackungsmaterial ein Kartonzuschnitt ist, und der erste und zweite Abschnitt (132, 136, 134, 138) ein erster und ein zweiter oberer Versiegelungsabschnitt (132, 134) des Kartonzuschnitts oder ein erster und ein zweiter unterer Versiegelungsabschnitt (136, 138) des Kartonzuschnitts ist.

3. Verfahren nach Anspruch 2, wobei die mindestens eine Sonotrode (306) und die erste Gruppe (308) von Ambosselementen in einer horizontalen Ebene angeordnet werden.

4. Verfahren nach einem der vorhergehenden Ansprüche, wobei zumindest ein Teil der Ambosselemente an Federn (314), beispielsweise Druckfedern, angebracht ist.

5. Verfahren nach einem der vorhergehenden Ansprüche, wobei die Ambosselemente Ambossräder sind.

6. Verfahren nach Anspruch 5, wobei mindestens eines der Ambossräder (500a, 500b) mit einer Kontaktfläche (502a, 502b) versehen ist, die mindestens ein erstes Segment (504a, 504b) eines ersten Segmenttyps und mindestens ein zweites Segment (506a, 506b) eines zweiten Segmenttyps umfasst, wobei sich der erste Segmenttyp von dem zweiten Segmenttyp unterscheidet.

7. Verfahren nach Anspruch 5 oder 6, wobei ein Durchmesser der Ambossräder der ersten Gruppe (308) im Bereich von 5 bis 50 mm liegt.

8. System (300) zum Versiegeln eines ersten Abschnitts (132, 136) und eines zweiten Abschnitts (134, 138) eines Stücks (100) Verpackungsmaterial (200) miteinander, wobei das System umfasst
mindestens eine Heizstation (302), die mindestens eine Sonotrode (306), die an einer ersten Seite des Stücks (100) angeordnet ist, und eine erste Gruppe (308) von Ambosselementen, die an einer zweiten Seite des Stücks (100) angeordnet ist, umfasst, wobei die erste Seite der zweiten Seite entgegengesetzt ist, wobei die erste Gruppe (308) von Ambosselementen in Bezug auf die mindestens eine Sonotrode (306) fest positioniert ist, **gekennzeichnet durch**
eine Kühlstation (304) zum Herunterkühlen des Stücks (100) Verpackungsmaterial derart, dass die mindestens eine Kunststoffschicht (212, 214, 216) verfestigt wird, wobei die Kühlstation Kühlelemente (318), beispielsweise Kühlräder, die an der ersten Seite des Stücks (100) Verpackungsmaterial angeordnet sind, und eine zweite Gruppe (316) von Ambosselementen, die an der zweiten Seite des Stücks (100) Verpackungsmaterial angeordnet ist, umfasst.

9. System nach Anspruch 8, wobei die Ambosselemente Ambossräder sind.

10. System nach Anspruch 9, wobei mindestens eines der Ambossräder (500a, 500b) mit einer Kontaktfläche (502a, 502b) versehen ist, die mindestens ein erstes Segment (504a, 504b) eines ersten Segmenttyps und mindestens ein zweites Segment (506a, 506b) eines zweiten Segmenttyps umfasst, wobei sich der erste Segmenttyp von dem zweiten Segmenttyp unterscheidet.

11. System nach Anspruch 9 oder 10, wobei ein Durchmesser der Ambossräder der ersten Gruppe (308) im Bereich von 5 bis 50 mm liegt.

## Revendications

1. Procédé (600) pour sceller ensemble une première section (132, 136) et une seconde section (134, 138) d'une pièce (100) de matériau de conditionnement (200), ledit procédé comprenant
l'agencement (602) de la pièce (100) de matériau de conditionnement de telle sorte que la première (132, 136) et la seconde section (134, 138) se trouvent l'une contre l'autre,
la fusion (604) d'au moins une couche de plastique (210, 214, 216) dans la première (132, 136) et la seconde section (134, 138) en faisant avancer la pièce (100) de matériau de conditionnement à travers un poste de chauffage (302), dans lequel le poste de chauffage (302) comprend au moins un émetteur d'ultrasons (306) placé sur un premier côté de la pièce (100) et un premier groupe (308) d'éléments enclumes placés sur un second côté de la pièce (100), dans lequel le premier côté est opposé au second côté, dans lequel le premier groupe (308) d'éléments enclumes est positionné de façon fixe par rapport à l'au moins un émetteur d'ultrasons (306), **caractérisé par**
le refroidissement (606) de la pièce (100) de matériau de conditionnement en faisant avancer la pièce (100) à travers un poste de refroidissement (304), dans lequel le poste de refroidissement (304) comprend des éléments de refroidissement (318), tels que des roues de refroidissement, placés sur le premier côté de la pièce (100) de matériau de conditionnement et un second groupe (316) d'éléments enclumes placés sur le second côté de la pièce (100) de matériau de conditionnement de telle sorte que l'au moins une couche de plastique (210, 214, 216) soit solidifiée.

2. Procédé selon la revendication précédente, dans lequel la pièce (100) de matériau de conditionnement est une découpe de brique, et la première et la seconde section (132, 136, 134, 138) est une première et une seconde section de scellage supérieure (132, 134) de la découpe de brique ou une première et une seconde section de scellage inférieure (136, 138) de la découpe de brique.

3. Procédé selon la revendication 2, dans lequel l'au moins un émetteur d'ultrasons (306) et le premier groupe (308) d'éléments enclumes sont placés dans un plan horizontal.

4. Procédé selon l'une quelconque des revendications précédentes, dans lequel au moins une partie des éléments enclumes est attachée à des ressorts (314), tels que des ressorts de compression.

5. Procédé selon l'une quelconque des revendications précédentes, dans lequel les éléments enclumes sont des roues enclumes.

6. Procédé selon la revendication 5, dans lequel au moins une des roues enclumes (500a, 500b) est pourvue d'une surface de contact (502a, 502b) comprenant au moins un premier segment (504a, 504b) d'un premier type de segment et au moins un second segment (506a, 506b) d'un second type de segment, dans lequel le premier type de segment est différent du second type de segment.

7. Procédé selon la revendication 5 ou 6, dans lequel un diamètre des roues enclumes du premier groupe (308) est dans la plage de 5 à 50 mm.

8. Système (300) pour sceller ensemble une première section (132, 136) et une seconde section (134, 138) d'une pièce (100) de matériau de conditionnement (200), ledit système comprenant
au moins un poste de chauffage (302) comprenant au moins un émetteur d'ultrasons (306) placé sur un premier côté de la pièce (100) et un premier groupe (308) d'éléments enclumes placés sur un second côté de la pièce (100), dans lequel le premier côté est opposé au second côté, dans lequel le premier groupe (308) d'éléments enclumes est positionné de façon fixe par rapport à l'au moins un émetteur d'ultrasons (306), **caractérisé par** un poste de refroidissement (304) pour refroidir la pièce (100) de matériau de conditionnement de telle sorte que l'au moins une couche de plastique (212, 214, 216) soit solidifiée, dans lequel le poste de refroidissement comprend des éléments de refroidissement (318), tels que des roues de refroidissement, placés sur le premier côté de la pièce (100) de matériau de conditionnement et un second groupe (316) d'éléments enclumes placés sur le second côté de la pièce (100) de matériau de conditionnement.

9. Système selon la revendication 8, dans lequel les éléments enclumes sont des roues enclumes.

10. Système selon la revendication 9, dans lequel au moins une des roues enclumes (500a, 500b) est pourvue d'une surface de contact (502a, 502b) comprenant au moins un premier segment (504a, 504b) d'un premier type de segment et au moins un second segment (506a, 506b) d'un second type de segment, dans lequel le premier type de segment est différent du second type de segment.

11. Système selon la revendication 9 ou 10, dans lequel un diamètre des roues enclumes du premier groupe (308) est dans la plage de 5 à 50 mm.
